# EUROPÄISCHE PATENTSCHRIFT

(11) **EP 2 171 817 B1**
(45) Veröffentlichungstag und Bekanntmachung des Hinweises auf die Patenterteilung: **25.06.2014**
(21) Anmeldenummer: 08758529.5
(22) Anmeldetag: 15.05.2008
(51) Int. Cl.: H02B 1/32

(54) **VORRICHTUNG ZUM ANORDNEN UND BEFESTIGEN VON ELEKTRISCHEN EINHEITEN INSBESONDERE IN EINEM SCHALTSCHRANK, SOWIE EIN MONTAGESYSTEM MIT EINER SOLCHEN VORRICHTUNG**
APPARATUS FOR ARRANGING AND FASTENING ELECTRICAL UNITS IN PARTICULAR IN A SWITCHGEAR CABINET, AND A FITTING SYSTEM WITH SUCH AN APPARATUS
DISPOSITIF POUR INSTALLER ET FIXER DES UNITÉS ÉLECTRIQUES, EN PARTICULIER DANS UNE ARMOIRE DE DISTRIBUTION, AINSI QUE SYSTÈME DE MONTAGE COMPORTANT UN TEL DISPOSITIF

(30) Priorität: 25.07.2007 DE 102007034600
(43) Veröffentlichungstag der Anmeldung: 07.04.2010
(73) Patentinhaber: Friedrich Lütze GmbH, 71384 Weinstadt-Grossheppach (DE)
(72) Erfinder: LÜTZE, Udo, 71394 Kernen-Stetten (DE)
(74) Vertreter: Crazzolara, Helmut
(86) Internationale Anmeldenummer: PCT/EP2008/003886
(87) Internationale Veröffentlichungsnummer: WO 2009/012830

(56) Entgegenhaltungen:
- DE-A1- 3 740 925
- FR-A- 2 242 793
- FR-A- 2 791 515

## Beschreibung

Die Erfindung betrifft eine Vorrichtung zum Anordnen und Befestigen von elektrischen Einheiten insbesondere in einem Schaltschrank, sowie ein Montagesystem mit einer solchen Vorrichtung.

Elektrische Baueinheiten für die industrielle Steuerungstechnik werden häufig in Schaltschränken oder Schaltkästen angeordnet, wobei die Baueinheiten hierzu auf einer Tragschiene, beispielsweise einer so genannten Hut- oder C-Schiene festgelegt werden. Aus der EP 0 902 513 A2 ist eine Vorrichtung zur Befestigung und Verdrahtung einer Vielzahl von elektrischen Einheiten bekannt.

In einigen Anwendungsfällen ist es vorteilhaft, anstelle der einzelnen elektrischen Einheiten komplette Funktionsmodule mit in der Regel mehreren auf einem Modulträger angeordneten elektrischen Einheiten vorzukonfektionieren und diese Modulträger anschließend an einer gattungsgemäßen Vorrichtung in einem Schaltschrank zu befestigen. Aus der EP 1 502 340 B1 ist ein Montagesystem bekannt, bei dem in einer Schaltschrankwand in vorgegebenem Abstand zueinander Löcher vorhanden sind, in welche Module einsteckbar sind. Die Position der Module an der Schrankwand ist durch die Position der Löcher fest vorgegeben. Die gegebenenfalls großen und auch schweren Module müssen exakt in diese Löcher eingesteckt werden.

Die DE 102 55 490 A1 zeigt eine Haltevorrichtung sowie ein Montagesystem für Geräte, bei dem die einzelnen Teile mit einfachem Werkzeug befestigt werden können. Dabei werden die Geräte in eine Haltevorrichtung eingehängt und mittels Befestigungsmitteln an der Haltevorrichtung fixiert.

Die DE 10 2005 053 549 A1 zeigt ein System zum Halten von Kabeln in Kabelkanälen, wobei die Kabelkanäle formschlüssig mit Kabelkanalhaltern verbindbar sind und die Kabelkanalhalter mit einer Profilschiene verbindbar sind.

Die GB 2 263 933 A zeigt einen Clip aus einem U-förmigen Federstahl, der in eine Deckenkonstruktion oder dergleichen eingeclipst werden kann und an dem eine Leitungsführung festlegbar ist.

Die EP 0 241 318 A2 zeigt ein Niederspannungs-Verteilersystem mit einer inneren und einer äußeren Leiterschiene, wobei ein elektrischer Anschlussadapter an einer wahlfreien Position entlang der Leiterschienen positionierbar ist und mit dem Anschlussadapter die Leiterschienen kontaktierbar sind.

Die US 6,654,255 B2 zeigt ein Montagesystem zum Anordnen und Befestigen von elektrischen Datenkommunikationseinrichtungen, wobei die Datenkommunikationseinrichtungen mittels eines von ihrem Gehäuse ausgebildeten Aufhängers in eine von einer Montageplatte ausgebildete Nut einhängbar sind.

Die DE 37 40 925 A1 zeigt eine Einrichtung zur Anbringung einer Profilschiene an einem Gerätegehäuse.

Die FR 2 791 515 A1 zeigt einen Geräte- bzw. Schaltschrank für elektrische, teiekommunikationstechnische oder mechanische Einrichtungen.

Die FR 2 242 793 und die zugehörige DE 23 44 808 A zeigen eine Vorrichtung mit den Merkmalen des Oberbegriffs des Patentanspruchs 1.

Der vorliegenden Erfindung liegt die Aufgabe zugrunde, eine Vorrichtung zum Anordnen und Befestigen von elektrischen Einheiten sowie ein zugehöriges Montagesystem mit einer solchen Vorrichtung bereitzustellen, welche die Nachteile des Starides der Technik überwinden. In einer Ausführungsart soll insbesondere das Anordnen und Befestigen von Modulträgern an der Vorrichtung vereinfacht sein und eine größere Wahlfreiheit bei der Anordnung der Modulträger an der Vorrichtung gegeben sein.

Die Erfindung ist durch die im Anspruch 1 bestimmte Vorrichtung sowie durch das im nebengeordneten Anspruch bestimmte Montagesystem gelöst. Besondere Ausführungsarten der Erfindung sind in den Unteransprüchen bestimmt.

In einer Ausführungsart weist die Vorrichtung ein Trägerelement auf, das eine sich in Längsrichtung erstreckende und zu einer Montageseite hin offene Nut aufweist. Der Modulträger ist entlang der Nut in eine wahlfreie Position einhängbar und kann anschließend entlang der Nut in die gewünschte Position verschoben werden. Dadurch ist die Montage des Modulträgers vereinfacht. Insbesondere ist es möglich, den Modulträger zunächst an einer Position in die Nut einzuhängen, die nicht die endgültige Position ist, beispielsweise in einer Position, die besonders leicht zugänglich ist. In dieser Position kann auch eine Verdrahtung und/oder eine Funktionsprüfung erfolgen. Es können auch mehrere Modulträger auf diese Art zunächst in dieselbe oder in eine benachbarte Nut eingehängt und miteinander verdrahtet werden, bevor der oder die Modulträger entlang der Nut in die endgültige Montageposition verschoben werden.

Die Nut ist dabei im Querschnitt so geformt, dass im eingehängten Zustand der Modulträger allein durch die auf ihn wirkende Gewichtskraft an dem Trägerelement gehalten ist und insbesondere gegen ein Herunterfallen von dem Trägerelement gesichert ist. Das Trägerelement kann eine Nut aufweisen oder auch mehrere, vorzugsweise parallel zueinander verlaufende Nuten. In einer Ausführungsart weist die Vorrichtung mehrere derartige Trägerelemente auf, die vorzugsweise parallel zueinander angeordnet sind. In einer Ausführungsart ist das Trägerelement durch ein Metallprofil gebildet und die Nut verläuft durchgehend über die gesamte Länge des Trägerelements.

Gattungsgemäße Vorrichtungen können neben den häufig horizontal verlaufenden Trägerelementen noch in der Regel vertikal verlaufende Tragschienen aufweisen, wobei die Trägerelemente entweder unmittelbar oder beispielsweise mit Hilfe von Befestigungsbügeln an der Tragschiene befestigt werden. In der Regel bilden die Tragschienen zusammen mit den Trägerelementen einen festen Rahmen, der in dem Schaltschrank festgelegt werden kann, beispielsweise indem die Tragschienen mit dem Schaltschrank verschraubt werden.

In einer Ausführungsart ist die Nut derart geformt, dass der eingehängte Modulträger durch die auf ihn wirkende Gewichtskraft eine in Richtung auf das Trägerelement wirkende Kraft erfährt. Hierzu kann die Nut und/oder der in die Nut eingehängte Teil des Modulträgers eine Schrägfläche aufweisen, die mit der Vertikalen einen Winkel von weniger als 90° aufweist. Dadurch wird der Modulträger beim Einhängen durch die wirkende Gewichtskraft in Anlage an das Trägerelement gebracht. Außerdem ist es für ein Aushängen erforderlich, den Modulträger anzuheben, was eine zusätzliche Sicherung gegen ein unbeabsichtigtes Aushängen bietet.

Der Querschnitt durch die Nut weist in einem von der montageseitigen Öffnung beabstandeten Bereich zwei voneinander beabstandete Schenkel auf. je nach Anordnung des Trägerelements wird beim Einhängen der Modulträger in den ersten oder den zweiten Schenkel der Nut eingeführt. Dadurch ist es möglich, Gleichteile für das Trägerelement zum Einhängen des Modulträgers an seinem oberen Ende und an seinem unteren Ende zu verwenden.

Der Modulträger kann plattenartig ausgebildet sein und beispielsweise an zwei einander gegenüberliegenden Kanten endseitig abgekantet sein, wobei in einer Ausführungsart die abgekanteten Abschnitte parallel zueinander ausgerichtet sind. Zum Einhängen kann mindestens ein abgekanteter Abschnitt des Modulträgers in die Nut des zugehörigen Trägerelements eingehängt werden. Vorzugsweise ist am oberen Ende des Modulträgers ein erstes Trägerelement vorgesetren und unteren Ende des Modulträgers ein zweites Trägerelemente vorgesehen. Der Modulträger wird mit seinem am oberen Ende vorhandenen abgekanteten Abschnitt in den ersten Schenkel der Nut des ersten Trägerelements eingehängt und mit seinem am unteren Ende vorhandenen abgekanteten Abschnitt in den zweiten Schenkel der Nut des zweiten Trägerelements eingehängt. Die Form der Nut und/oder die Form des abgekanteten Abschnitts des Modulträgers können dabei so gewählt werden, dass sich durch das Einhängen eine federelastische Verformung insbesondere des abgekanteten Abschnitts des Modulträgers ergibt, durch welche nach dem Einhängen der Modulträger in der Nut vorfixiert ist.

Die beiden Schenkel der Nut streben mit zunehmendem Abstand von der montageseitigen Öffnung auseinander. In einer Ausführungsart schließen die beiden Schenkel einen Winkel zwischen 45 und 75° ein, insbesondere zwischen 55 und 65°, und vorzugsweise 60°.

In einer Ausführungsart ist der Querschnitt durch die Nut symmetrisch zu einer mittig in Bezug auf die montageseitige Öffnung verlaufenden Achse. In einer Ausführungsart verläuft die Symmetrieachse rechtwinklig zu einer die beiden Ränder der Öffnung der Nut verbindenden gedachten Linie.

In einer Ausführungsart weist das Trägerelement zur Montageseite hin Öffnungen für die Aufnahme von Befestigungsmitteln auf, mittels denen der eingehängte Modulträger an dem Trägerelement befestigbar ist. Grundsätzlich ist es möglich, Gewindebohrungen oder Öffnungen, in welche eine Schraube eindrehbar ist, in einem festen Rastermaß an dem Trägerelement vorzusehen, In einer Ausführungsart werden die Öffnungen für die Aufnahme der Befestigungsmittel durch eine sich jedenfalls über eine gewisse Länge erstreckende, vorzugsweise über die gesamte Länge des Trägerelements sich erstreckende Nut gebildet. Dies hat den Vorteil, dass die Befestigungsmittel, insbesondere Befestigungsschrauben, an praktisch jeder Stelle in die Nut eingedreht werden können und dadurch der eingehängte Modulträger an einer wahlfreien Position an dem Trägerelement befestigt werden kann. Die Nut ist insbesondere dann einfach herstellbar, wenn das Trägerelement als Profil ausgebildet ist.

In einer Ausführungsart ist die Nut auf ihren sich in Längserstreckung verlaufenden Seitenwänden mit Rillen versehen, deren Ausdehnung und Abstand zueinander an die einzuschraubenden Befestigungsmittel angepasst sein kann. Durch diese Rillung der Nut ist die Kraft zum Eindrehen der Befestigungsmittel herabgesetzt. Die Rillung kann dabei ebenfalls bereits bei der Herstellung des als Profil ausgebildeten Trägerelements vorgesehen werden.

In einer Ausführungsart weist die Nut für das Einhängen des Modulträgers einen Abschnitt für die Aufnahme einer entlang der Nut verschiebbaren Gleitmutter auf. Mit der Gleitmutter können auch Modulträger oder sonstige Komponenten, die nicht in die Nut eingehängt werden, an dem Trägerelement befestigt werden.

In einer Ausführungsart weist das Trägerelement benachbart zu der montageseitigen Öffnung der Nut für das Einhängen der Modulträger eine Anlagefläche für den Modulträger auf, insbesondere eine plane Anlagefläche. Dadurch ergibt sich beim Befestigen automatisch eine plane Ausrichtung des Modulträgers in Bezug auf das Trägerelement.

In einer Ausführungsart weist das Trägerelement eine Befestigungsschiene zum unmittelbaren Befestigen von elektrischen Einheiten auf. Die Befestigungsschiene ist vorzugsweise einstückig von dem Trägerelement ausgebildet. Bei der Befestigungsschiene kann es sich beispielsweise um eine Hutschiene handeln, etwa eine Hutschiene gemäß EN 50022,. Auf eine solche Befestigungsschiene können beispielsweise elektrische Komponenten in sogenannten Reihenklemmengehäusen einfach aufgesteckt und an dem Trägerelement befestigt werden.

In einer Ausführungsart bildet das Trägerelement außerdem und vorzugsweise einstückig Festlegemittel für das Anbringen eines sogenannten Verdrahtungskammes an dem Trägerelement aus. Mittels des Montagekammes können elektrische Leitungen, die auf der Montageseite der Vorrichtung zu den elektrischen Einheiten hingeführt werden, auf die der Montageseite gegenüberliegende Rückseite geführt werden, auf der die Leitungsführung und damit die Verdrahtung der elektrischen Einheiten erfolgen kann.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiel im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht auf einen Schaltkasten oder Schaltschrank,
- Fig. 2: zeigt eine perspektivische Ansicht eines Trägerelements,
- Fig. 3: zeigt einen Querschnitt durch das Trägerelement der Fig. 2,
- Fig. 4: zeigt ein weiteres Ausführungsbeispiel einer erfindungsgemäßen Vorrichtung,
- Fig. 5: zeigt eine Ausschnittsvergrößerung der Fig. 4, und
- Fig. 6: zeigt eine vergrößerte Darstellung eines Teils des abgekanteten Abschnitts des Modulträgers.

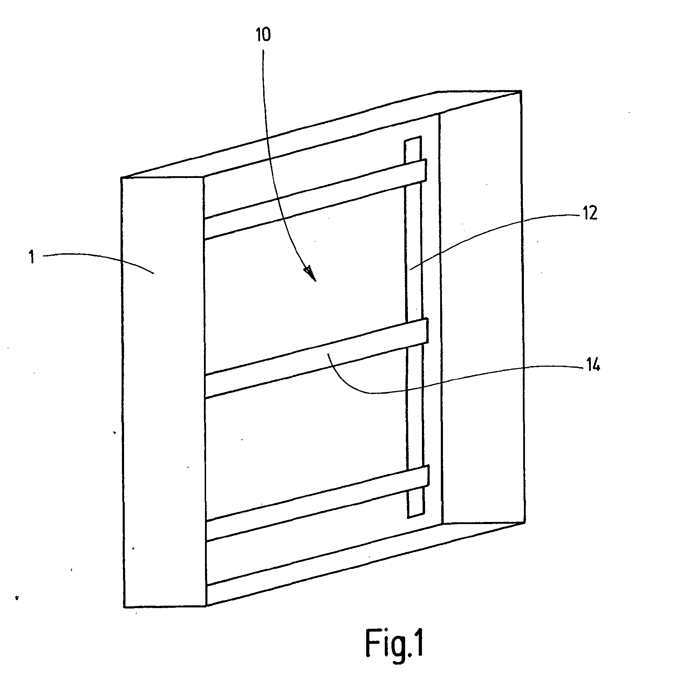

Die Figur 1 zeigt eine perspektivische Ansicht auf einen Schaltkasten oder Schaltschrank 1, wie er für die Montage elektrischer Steuereinrichtungen beispielsweise in der industriellen Fertigungstechnik üblicherweise verwendet wird. In dem Schaltschrank 1 ist eine Vorrichtung 10 zum Anordnen und Befestigen von elektrischen Einheiten angeordnet, wobei im dargestellten Ausführungsbeispiel die Vorrichtung 10 vertikal verlaufende Tragschienen 12 und damit verbundene und horizontal verlaufende Trägerelemente 14 aufweist. Die Trägerelemente 14 sind im Ausführungsbeispiel durch langgestreckte Montageschienen gebildet. Diese Montageschienen sind aus einem Profil hergestellt, beispielsweise aus einem Aluminiumprofil, und können in der jeweils erforderlichen Länge von einem Endlosprofil abgelängt werden.

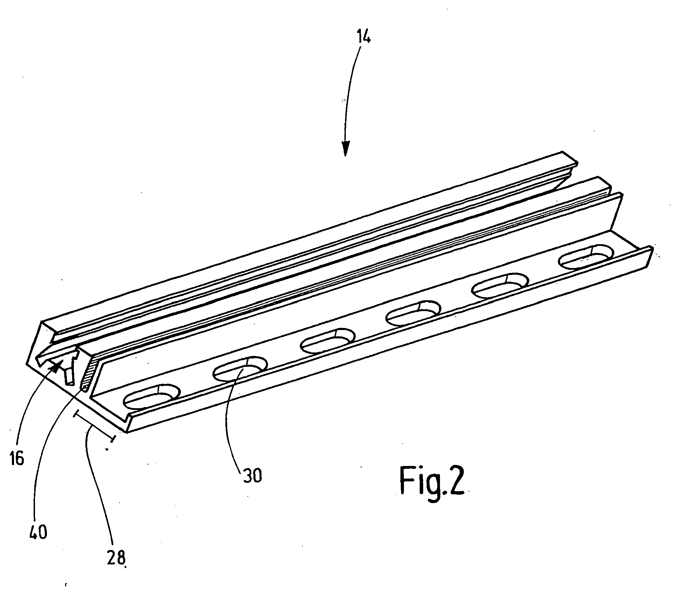

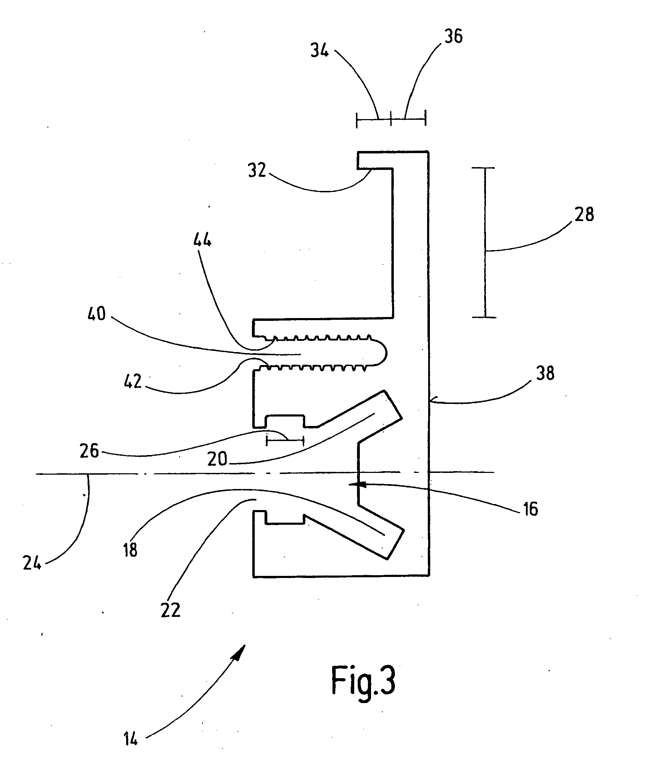

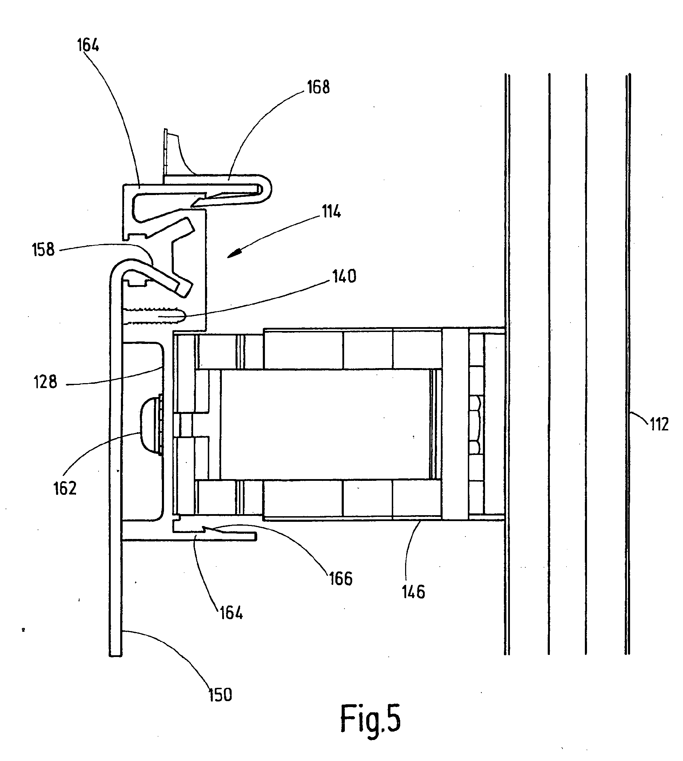

Die Fig. 2 zeigt eine perspektivische Ansicht eines Trägerelements 14 und die Fig. 3 zeigt einen Querschnitt durch das Trägerelement 14 der Fig. 2. In Längsrichtung erstreckt sich eine im Querschnitt annähernd "Y"-förmige Nut 16, die mit ihrem die beiden Schenkel 18, 20 verbindenden Abschnitt zur Montageseite hin offen ist. In diese Nut 16 kann ein abgekanteter Abschnitt 158 (Fig. 5) eines Modulträgers 150 eingehängt werden, wobei der abgekantete Abschnitt 158 in eine der beiden von der Nut 16 ausgebildeten Schenkel 18, 20 eingreift. Die beiden Schenkel 18, 20 streben mit zunehmendem Abstand von der montageseitigen Öffnung 22 der Nut 16 auseinander. Die Nut 16 ist symmetrisch zu der mittig in Bezug auf die montageseitige Öffnung 22 verlaufende Achse 24. Die beiden Schenkel 18, 20 schließen einen Winkel zwischen 45 und 75° ein, insbesondere zwischen 55 und 65° und vorzugsweise etwa 60°.

Zwischen der montageseitigen Öffnung 22 und den beiden Schenkeln 18, 20 weist die Nut 16 einen Abschnitt 26 für die Aufnahme einer Gleitmutter auf, in welche von der montageseitigen Öffnung 22 her eine Befestigungsschraube einschraubbar ist. Die zwischen der montageseitigen Öffnung 22 und dem sacklochförmigen Ende der Schenkel 18, 20 zu bemessende Tiefe der Nut 16 beträgt mindestens 50 % der Dicke des Trägerelements 14, vorzugsweise mindestens 80 %.

An oder nahe einer der Nut 16 fernen Längskante bildet das Trägerelement 14 einen leistenförmigen Abschnitt 28 aus, in dem in Längsrichtung hintereinander und vorzugsweise gleich beabstandet Öffnungen, vorzugsweise Langlöcher 30, angeordnet sind, mittels denen das Trägerelement 14 an weiteren Elementen befestigbar ist, insbesondere an den Tragschienen 12 oder unmittelbar an dem Schaltschrank 1. Das Trägerelement 14 weist anschließend an dem leistenförmigen Abschnitt 28 einen hochgezogenen Rand 32 auf, wobei die Höhe 34 des Randes 32 zwischen 50 und 200 %, vorzugsweise zwischen 80 und 120 % der Dicke 36 des Trägerelements 14 im Bereich des leistenförmigen Abschnitts 28 beträgt. Die zwischen dem sacklochartigen Ende der Schenkel 18, 20 und der gegenüberliegenden Planfläche 38 verbleibende Dicke des Trägerelements 14 beträgt ebenfalls zwischen 50 und 200 % der Dicke des Trägerelements 14 im leistenförmigen Abschnitt 28.

Zwischen der Nut 16 und dem leistenförmigen Abschnitt 28 weist das Tragelement 14 eine parallel zur Nut 16 verlaufende weitere Nut 40 auf. Die weitere Nut 40 ist an ihrer Bodenfläche im Querschnitt halbkreisförmig verrundet und weist an ihrer zur Montageseite hin vorhandenen Öffnung eine stufenförmige Aufweitung auf. Zwischen der montageseitigen Öffnung und der Bodenfläche sind in Längsrichtung des Trägerelements 14 verlaufende Rillen 42, 44 in der Nut vorgesehen. Diese Rillen 42, 44 sollen das Eindrehen von Befestigungsschrauben vereinfachen, mittels denen ein in die Nut 16 eingehängter Modulträger 150 an dem Trägerelement 14 fixierbar ist. Die Rillen 42, 44 einer Seitenwand sind äquidistant und parallel zueinander verlaufend angeordnet. Erste Rillen 42 der einen Seitenwand der weiteren Nut 40 weisen gegenüber zweiten Rillen 44 auf der gegenüberliegenden Seitenwand einen Versatz von 50 % des Rastermaßes der ersten und zweiten Rillen 42, 44 auf.

Grundsätzlich können in eine solche gerillte Nut 40 auch Schrauben mit beispielsweise metrischem Gewinde eingedreht werden. Insbesondere dann, wenn durch das Eindrehen der Befestigungsschrauben nicht nur eine mechanische Befestigung, sondern auch eine elektrische Verbindung zwischen der Befestigungsschraube und mithin dem Modulträger 150 und dem Trägerelement 14 hergestellt werden soll, können auch selbstschneidende Schrauben verwendet werden, wie beispielsweise sogenannte Blechschrauben, die insbesondere bei der Verwendung von Aluminiumprofilen für das Trägerelement 14 die an der Oberfläche vorhandenen elektrisch isolierenden Schichten durchdringen und einen sicheren elektrischen Kontakt herstellen. Die zwischen der Bodenfläche der weiteren Nut 40 und der gegenüberliegenden Planfläche 38 verbleibende Dicke beträgt zwischen 100 und 300 % der Dicke 36 des Trägerelements 14 im leistenförmigen Abschnitt 28, insbesondere zwischen 100 und 200%.

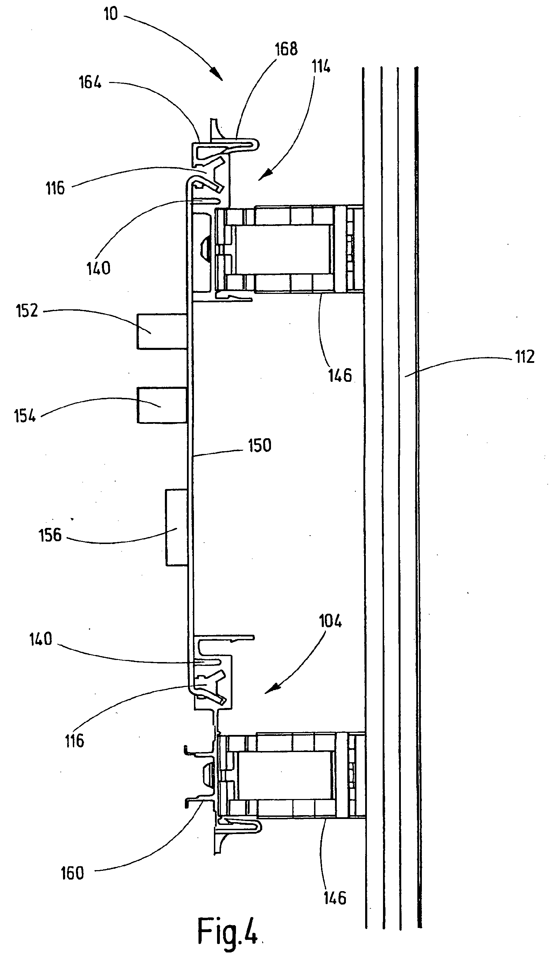

Die Fig. 4 zeigt ein weiteres Ausführungsbeispiel einer erfindungsgemäßen Vorrichtung 10, wobei zwei unterschiedliche Trägerelemente 104, 114 über jeweils einen Befestigungsbügel 146 an der Tragschiene 112 befestigt sind. Die Fig. 5 zeigt eine Ausschnittsvergrößerung der Fig. 4.

Beide Trägerelemente 104, 114 weisen eine Nut 116 sowie eine weitere Nut 140 auf. Auf einem beispielsweise aus einem Metallblech hergestellten Modulträger 150 können eine oder mehrere elektrische Einheiten 152, 154, 156 mechanisch befestigt sein und gegebenenfalls auch miteinander und/oder mit weiteren an der Vorrichtung 10 angeordneten elektrischen Einheiten elektrisch verbunden sein. Ein Vorteil der Verwendung eines solchen Modulträgers 150 besteht darin, dass die elektrischen Einheiten 152, 154, 156 vormontiert und vorverdrahtet werden können, bevor der Modulträger 150 an der Vorrichtung 10 angeordnet und befestigt wird. Dadurch lassen sich gewisse Installationsarbeiten vorbereiten und die abschließende Montage der elektrischen Einheiten 152, 154, 156 ist verkürzt.

Zum Anordnen wird der Modulträger 150 in die Nut 116 eingehängt, und zwar oben und unten jeweils in den nach schräg unten ausgerichteten Schenkel 20 der Nut 116. Hierzu weist der Modulträger 150 oben und unten jeweils einen abgekanteten Abschnitt 158 auf, die parallel zueinander verlaufen und mit dem weiteren flächigen Abschnitt des Modulträgers 150, auf dem die elektrischen Einheiten 152, 154, 156 angeordnet sind, einen Winkel zwischen 45 und 75° einschließen, insbesondere etwa 60°. Das Trägerelement 114 bildet eine oder mehrere plane Anlageflächen für eine mindestens abschnittsweise flächige Anlage des Trägerelements 150 aus. Die plane Anlagefläche ist beispielsweise in einem an die Nut 116 anschließenden Bereich oder zwischen der Nut 116 und der weiteren Nut 140 angeordnet.

Da sich die Nut 116 über die gesamte Länge des Trägerelements 114 erstreckt, kann der Modulträger 150 an einer in Längsrichtung der Nut 116 wahlfreien Position eingehängt werden. Außerdem kann der Modulträger 150 nach dem Einhängen noch entlang der Nut 116 verschoben werden, bis er seine endgültige Position einnimmt. In dieser kann der Modulträger 150 durch Einschrauben einer Befestigungsschraube in die weitere Nut 140 endgültig befestigt werden.

Die Verbindung zwischen dem Trägerelement 114 und dem Befestigungsbügel 146 erfolgt durch eine im leistenförmigen Abschnitt 128 eingeschraubte Befestigungsschraube 162. Abweichend von dem Ausführungsbeispiel der Figuren 2 und 3 weist das Trägerelement 114 des weiteren Ausführungsbeispiels der Figuren 4 und 5 auf seinen einander gegenüberliegenden Längskanten jeweils einen Steg 164 auf, der jeweils auf seiner zum Trägerelement 114 zugewandten Seite vorzugsweise einstückig eine Rastnase 166 ausbildet, auf die ein sogenannter Kabelkamm 168 lösbar aufsteckbar ist, mittels dem elektrische Leitungen von der Montageseite und insbesondere von der Seite, auf welcher die elektrischen Einheiten 152, 154, 156 auf dem Modulträger 150 angeordnet sind, auf die Rückseite des Trägerelements 114 durchgeführt werden können, insbesondere in den zwischen dem Modulträger 150 und der Tragschiene 112 angeordneten Bereich, in dem eine Leitungsführung erfolgen kann.

Das weitere Trägerelement 104 (Fig. 4) bildet einstückig eine in Längsrichtung des weiteren Trägerelements 104 verlaufende Befestigungsschiene 160 aus, insbesondere eine sogenannte Hutschiene. Auf dieser Befestigungsschiene 160 können weitere elektrische Einheiten angeordnet werden, beispielsweise Einheiten, die in sogenannten Reihenklemmengehäusen untergebracht sind. Mithin kann eine elektrische Einheit, die auf einer solchen Befestigungsschiene 160 angeordnet ist, mit einer kurzen Verbindungsleitung mit einer elektrischen Einheit 152, 154, 156 verbunden werden, die auf einem benachbart angeordneten Modulträger 150 angeordnet ist.

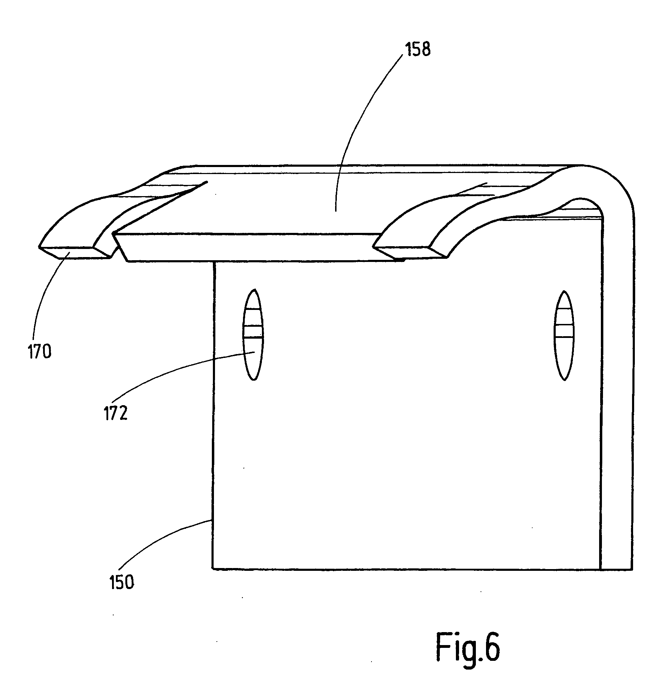

Die Fig. 6 zeigt eine vergrößerte Darstellung eines Teils 170 des abgekanteten Abschnitts 158 des Modulträgers 150. Der randseitig angeordnete Teil 170 ist von dem mittigen abgekanteten Abschnitt 158 abgetrennt und anschließend mit einer Biegung versehen, die im dargestellten unverformten Zustand über die vom abgekanteten Abschnitt 158 gebildete plane Kontur hinausragt und dadurch beim Einhängen des Modulträgers 150 in die Nut 116 federelastisch verformbar ist, sodass der Modulträger 150 in der Nut 116 verrastet. Die Formgestaltung des Teils 170 kann dabei in Abstimmung mit der Form der Nut 116 so gewählt werden, dass sowohl das Einrasten des Modulträgers 150 in die Nut 116 als auch das Lösen dieser Verrastung werkzeuglos erfolgen kann. Auf diese Weise ist es möglich, den Modulträger 150 zunächst in die Nut 116 einzuhängen, ihn anschließend durch Verschieben in der Nut 116 zu positionieren und in der so vorgewählten Position durch endgültiges Einstecken des Modulträgers 150 in der Nut 116 zu verrasten. Zusätzlich kann mittels einer in die weitere Nut 140 einschraubbaren und durch Löcher 172 im Modulträger 150 hindurchtretenden Befestigungsschraube eine endgültige Fixierung erfolgen.

## Patentansprüche

1. Vorrichtung (10) zum Anordnen und Befestigen von elektrischen Einheiten (152, 154, 156) insbesondere in einem Schaltschrank (1), wobei die Vorrichtung (10) ein Trägerelement (14) aufweist, an dessen Montageseite ein Modulträger (150) mit mindestens einer darauf angeordneten elektrischen Einheit (152, 154, 156) anordenbar und befestigbar ist, wobei das Trägerelement (14) eine sich in einer Längsrichtung erstreckende und zur Montageseite hin offene Nut (16) aufweist, **dadurch gekennzeichnet, dass** die Nut (16) im Querschnitt Y-förmig ist und in einem von der montageseitigen Öffnung (22) beabstandeten Bereich zwei voneinander beabstandete und mit zunehmendem Abstand von der montageseitigen Öffnung (22) auseinander strebende Schenkel (18, 20) aufweist, in welche der Modulträger (150) an einer in Längsrichtung der Nut (16) wahlfreien Position einhängbar ist, und dass die Nut (16) derart geformt ist, dass durch die Gewichtskraft, die auf den eingehängten Modulträger (150) wirkt, der Modulträger (150) an dem Trägerelement (14) angeordnet ist und gegen ein Herunterfallen von dem Trägerelement (74) gesichert ist.

2. Vorrichtung (10) nach Anspruch 1, **dadurch gekennzeichnet, dass** die Nut (16) derart geformt ist, dass der eingehängte Modulträger (150) durch die auf ihn wirkende Gewichtskraft eine in Richtung auf das Trägerelement (14) wirkende Kraft erfährt.

3. Vorrichtung (10) nach einem Ansprüche 1 oder 2, **dadurch gekennzeichnet, dass** der Querschnitt durch die Nut (16) symmetrisch zu einer mittig in Bezug auf die montageseitige Öffnung verlaufenden Achse (24) ist.

4. Vorrichtung (10) nach einem Ansprüche 1 bis 3, **dadurch gekennzeichnet, dass** die Nut (16) einen Abschnitt (26) für die Aufnahme einer Gleitmutter aufweist.

5. Vorrichtung (10) nach einem der vorgenannten Ansprüche, **dadurch gekennzeichnet, dass** das Trägerelement (14) zur Montageseite hin Öffnungen für die Aufnahme eines Befestigungsmittels aufweist, mittels dem der eingehängte Modulträger (150) an dem Trägerelement (14) befestigbar ist.

6. Vorrichtung (10) nach Anspruch 5, **dadurch gekennzeichnet, dass** die Öffnungen für die Aufnahme der Befestigungsmittel durch eine vorzugsweise mit Rillen versehene weitere Nut (40) gebildet sind.

7. Vorrichtung (10) nach einem der vorgenannten Ansprüche, **dadurch gekennzeichnet, dass** das Trägerelement (14) eine vorzugsweise einstückig von dem Trägerelement (14) ausgebildete Befestigungsschiene (160) zum Befestigen von elektrischen Einheiten aufweist.

8. Vorrichtung (10) nach einem der vorgenannten Ansprüche, **dadurch gekennzeichnet, dass** das Trägerelement (14) durch eine Montageschiene gebildet ist, die mit einer vorzugsweise rechtwinklig zur Montageschiene verlaufenden und in einem Schaltschrank (1) befestigbaren Tragschiene (12) verbindbar ist.

9. Montagesystem mit einer Vorrichtung (10) zum Anordnen und Befestigen von elektrischen Einheiten (152, 154, 156) insbesondere in einem Schaltschrank (1), nach einem der vorgenannten Ansprüche, **dadurch gekennzeichnet, dass** das Montagesystem weiterhin einen plattenförmigen Modulträger (150) aufweist, auf dem mindestens eine elektrische Einheit (152, 154, 156) anordenbar ist und der auf mindestens einer Seite einen abgekanteten Abschnitt (158) aufweist, mittels dem der Modulträger (150) in die Nut (16) des Trägerelements (14) einhängbar ist.

10. Montagesystem nach Anspruch 9, **dadurch gekennzeichnet, dass** der abgekantete Abschnitt (158) mit einem weiteren Abschnitt des Trägerelements, auf dem die elektrische Einheit (152, 154, 156) angeordnet ist, einen Winkel von weniger als 90° einschließt.

11. Montagesystem nach Anspruch 9 oder 10, **dadurch gekennzeichnet, dass** der Modulträger (150) auf zwei einander gegenüberliegenden Seiten jeweils einen abgekanteten Abschnitt (158) aufweist, mittels dem der Modulträger (150) in die Nut (16) des Trägerelements (14) einhängbar ist.

12. Montagesystem nach Anspruch 11, **dadurch gekennzeichnet, dass** der Modulträger (150) beim Anordnen an dem Trägerelement (14) mit beiden abgekanteten Abschnitten (158) jeweils in eine Nut (16) eines Trägerelements (14) einhängbar ist.

13. Montagesystem nach einem der Ansprüche 9 bis 12, **dadurch gekennzeichnet, dass** mindestens ein Teil (170) des abgekanteten Abschnitts (158) derart federelastisch verformbar ist, dass beim Einhängen des Modulträgers (150) in die Nut (16) des Trägerelements (14) der Modulträger (150) vorzugsweise werkzeuglos lösbar mit dem Trägerelement (14) verrastet.

## Claims

1. An apparatus (10) for arranging and fastening electrical units (152, 154, 156), in particular in a switch cabinet (1), the apparatus (10) having a carrier element (14) on the fitting side of which a module carrier (150) with at least one electrical unit (152, 154, 156) disposed thereon can be arranged and fastened, the carrier element (14) having a groove (16) extending in a longitudinal direction and open to the fitting side, **characterised in that** the groove (16) has a Y-shaped cross section and has in a region spaced apart from the fitting-side opening (22) two arms (18, 20), spaced apart from one another and moving apart from one another by an increasing distance from the fitting-side opening (22), in which the module carrier (150) can be suspended in any position in a longitudinal direction of the groove (16) and that the groove (16) is shaped such that the module carrier (150) is disposed on the carrier element (14) by the weight acting on the suspended module carrier (150) and is protected against falling down from the carrier element (14).

2. The apparatus (10) according to Claim 1, **characterised in that** the groove (16) is shaped such that the suspended module carrier (150) experiences a force acting in the direction of the carrier element (14) due to the weig ht acting on it.

3. The apparatus (10) according to either of Claims 1 or 2, **characterised in that** the cross section through the groove (16) is symmetrical to an axis (24) running centrally in relation to the fitting-side opening.

4. The apparatus (10) according to any of Claims 1 to 3, **characterised in that** the groove (16) has a section (26) for holding a sliding nut.

5. The apparatus (10) according to any of the above-specified claims, **characterised in that** the carrier element (14) has openings towards the fitting side for holding a fastening means by means of which the suspended module carrier (150) can be fastened to the carrier element (14).

6. The apparatus (10) according to Claim 5, **characterised in that** the openings for holding the fastening means are formed by a further groove (40) preferably provided with channels.

7. The apparatus (10) according to any of the above-specified claims, **characterised in that** the carrier element (14) has a fastening rail (160) preferably formed in one piece by the carrier element (14) for fastening electrical units.

8. The apparatus (10) according to any of the preceding claims, **characterised in that** the carrier element (14) is formed by a fitting rail which can be connected to a carrying rail (12) preferably running at a right angle to the fitting rail and that can be fastened in a switch cabinet (1).

9. A fitting system with an apparatus (10) for arranging and fastening electrical units (152, 154, 156), in particular in a switch cabinet (1), according to any of the above-specified claims, **characterised in that** the fitting system furthermore has a plate-shaped module carrier (150) on which at least one electrical unit (152, 154, 156) can be disposed and which on at least one side has a bevelled section (158) by means of which the module carrier (150) can be suspended in the groove (16) of the carrier element (14).

10. The fitting system according to Claim 9, **characterised in that** the bevelled section (158) encloses an angle of less than 90° with another section of the carrier element on which the electrical unit (152, 154, 156) is disposed.

11. The fitting system according to Claim 9 or 10, **characterised in that** the module carrier (150) has on two opposing sides respectively a bevelled section (158) by means of which the module carrier (150) can be suspended in the groove (16) of the carrier element (14).

12. The fitting system according to Claim 11, **characterised in that** when disposed on the carrier element (14) the module carrier (150) can be suspended with both bevelled sections (158) respectively in one groove (16) of a carrier element (14).

13. The fitting system according to any of Claims 9 to 12, **characterised in that** at least one part (170) of the bevelled section (158) can be deformed spring-elastically such that when the module carrier (150) is suspended in the groove (16) of the carrier element (14) the module carrier (150) preferably locks detachably to the carrier element (14) without any tools.

## Revendications

1. Dispositif (10) d'installation et de fixation d'unités (152, 154, 156) électriques, notamment dans une armoire (1) de distribution, le dispositif (10) ayant un élément (14) formant support, sur le côté de montage duquel un support (150) de module, ayant au moins une unité (152, 154, 156) électrique qui y est installée, peut être installé et peut être fixé, l'élément (14) formant support ayant une rainure (16) s'étendant dans une direction longitudinale et ouverte vers le côté de montage, **caractérisé en ce que** la rainure (16) a une section transversale en forme de Y et a, dans une partie à distance de l'ouverture (22) du côté de montage, deux branches (18, 20) à distance l'une de l'autre et s'écartant l'une de l'autre de plus en plus à mesure qu'augmente la distance à l'ouverture (22) du côté de montage, rainure dans laquelle le support (150) de module peut être suspendu en une position au choix dans la direction longitudinale de la rainure (16) et **en ce que** la rainure (16) est conformée de manière à ce que, par la force pondérale qui s'applique au support (150) de module suspendu, le support (150) de module soit installé sur l'élément (14) formant support et soit empêché de tomber de l'élément (14) formant support.

2. Dispositif (10) suivant la revendication 1, **caractérisé en ce que** la rainure (16) est conformée de manière à ce que le support (150) de module suspendu subisse, par la force pondérale qui s'y applique, une force s'appliquant dans la direction de l'élément (14) formant support.

3. Dispositif (10) suivant la revendication 1 ou 2, **caractérisé en ce que** la section transversale de la rainure (16) est symétrique par rapport à un axe (24) s'étendant au milieu, rapporté à l'ouverture du côté de montage.

4. Dispositif (10) suivant des revendications 1 à 3, **caractérisé en ce que** la rainure (16) a un tronçon (26) de réception d'un écrou coulisseau.

5. Dispositif (10) suivant l'une des revendications précédentes, **caractérisé en ce que** l'élément (14) formant support a, du côté du montage, des ouvertures de réception d'un moyen de fixation à l'aide duquel le support (50) de module suspendu peut être fixé à l'élément (14) formant support.

6. Dispositif (10) suivant la revendication 5, **caractérisé en ce que** les ouvertures de réception du moyen de fixation sont formées par une autre rainure (40) munie de préférence de nervures.

7. Dispositif (10) suivant l'une des revendications précédentes, **caractérisé en ce que** l'élément (14) formant support a, pour la fixation d'unités électriques, un rail (160) de fixation, constitué de préférence d'une seule pièce avec l'élément (14) formant support.

8. Dispositif (10) suivant l'une des revendications précédentes, **caractérisé en ce que** l'élément (14) formant support est formé par un rail de montage, qui peut être relié à un rail (12) porteur s'étendant de préférence à angle droit au rail de montage et pouvant.être fixé dans une armoire (1) de distribution.

9. Système de montage comprenant un dispositif (10) d'installation et de fixation d'unités (152, 154, 156) électriques, notamment dans une armoire (1) de distribution, suivant l'une des revendications précédentes, **caractérisé en ce que** le système de montage a, en outre, un support (150) de montage en forme de plaque, sur lequel au moins une unité (152, 154, 156) électrique peut être installée et qui a, sur au moins un côté, une partie (158) pliée à l'aide de laquelle le support (150) de module peut être suspendu dans la rainure (16) de l'élément (14) formant support.

10. Système de montage suivant la revendication 9, **caractérisé en ce que** la partie (158) pliée fait, avec une autre partie de l'élément formant support sur lequel l'unité (152, 154, 156) électrique est installée, un angle de moins de 90°.

11. Système de montage suivant la revendication 9 ou 10, **caractérisé en ce que** le support (150) de module a, sur deux côtés opposés l'un à l'autre respectivement, une partie (158) pliée, au moyen de laquelle le support (150) de module peut être suspendu dans la rainure (16) de l'élément (14) formant support.

12. Système de montage suivant la revendication 11, **caractérisé en ce que** le support (150) de module peut, lors de l'installation sur l'élément (14) formant support, être suspendu par deux parties (158) pliées respectivement dans une rainure (16) d'un élément (14) formant support.

13. Système de montage suivant l'une des revendications 9 à 12, **caractérisé en ce qu'**au moins une partie (170) de la partie (158) pliée peut être déformée élastiquement à la manière d'un ressort de manière à ce que, lorsque le support (150) de module est suspendu dans la rainure (16) de l'élément (14) formant support, le support (150) de module soit encliqueté dans l'élément (14) formant support de manière à pouvoir être désencliqueté de préférence sans outil.
